(19) **Europäisches Patentamt / European Patent Office / Office européen des brevets**

(11) **EP 4 554 083 A1**

(12) **EUROPEAN PATENT APPLICATION**
published in accordance with Art. 153(4) EPC

(43) Date of publication:
**14.05.2025   Bulletin 2025/20**

(51) International Patent Classification (IPC):
*H02P 27/06* (2006.01)     *H02P 21/22* (2016.01)

(21) Application number: **23835222.3**

(52) Cooperative Patent Classification (CPC):
**H02P 21/22; H02P 27/06**

(22) Date of filing: **09.06.2023**

(86) International application number:
**PCT/JP2023/021479**

(87) International publication number:
**WO 2024/009686 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **07.07.2022   JP 2022109667**

(71) Applicant: **DENSO CORPORATION
Kariya-shi, Aichi  448-8661 (JP)**

(72) Inventors:
• **HASHIZUME, Ryoya**
 Nisshin-city, Aichi 470-0111 (JP)
• **KUBO, Shunichi**
 Nisshin-city, Aichi 470-0111 (JP)

(74) Representative: **Kuhnen & Wacker
Patent- und Rechtsanwaltsbüro PartG mbB
Prinz-Ludwig-Straße 40A
85354 Freising (DE)**

(54)    **CONTROL DEVICE FOR POWER CONVERTER AND PROGRAM**

(57)    A control device (60) is applied to a system including a power storage unit (10, 100, 200), a plurality of power converters (20, 40, 70, 80, 110, 210), a rotating electric machine (30, 90, 120, 220) having windings electrically connected to each of the power converters, and a heat transfer unit (400, 401) that transfers heat generated in at least one of the power converters to a target to be heated (10, 100, 200). The control device includes a determination unit that determines whether there is a temperature increase request for a target to be heated, and a control unit that, when it is determined that there is a temperature increase request, performs switching control of each power converter so as to pass AC d-axis and q-axis currents through the windings (32, 34U to 34W, 93A, 93B, 123U to 123W, 223U to 223W) while maintaining a rotor (31, 91, 121, 221) of the rotating electric machine in a stopped state from rotating.

**FIG. 1**

EP 4 554 083 A1

**Description**

CROSS REFERENCE TO RELATED APPLICATIONS

This application is based on Japanese Application No. 2022-109667 filed on July 7, 2022, the contents of which are incorporated herein by reference.

TECHNICAL FIELD

The present disclosure relates to a control device for a power converter and a program.

BACKGROUND ART

Conventionally, as described in Patent Document 1, there is known a control device that is applied to a vehicle that includes a battery, an inverter electrically connected to the battery, and a rotating electric machine having an armature winding electrically connected to the inverter. This control device performs switching control of the inverter while the vehicle is stopped, thereby causing a d-axis current to flow through the armature winding while keeping a q-axis current flowing through the armature winding at zero. This allows the temperature of the battery to be increased while maintaining the rotor of the rotating electric machine in a stopped state. As a result, the battery can be warmed up while the vehicle is maintained in the stopped state.

PRIOR ART DOCUMENT

PATENT DOCUMENT

Patent Document 1: Japanese Patent No. 5259752

SUMMARY OF INVENTION

In order to rapidly raise the temperature of a target for temperature raising, such as a battery, it is conceivable to flow the q-axis current in addition to the d-axis current. In this case, however, there is a concern that torque will be generated in the rotating electric machine, making it impossible to maintain the rotor in the stopped state.

A primary object of the present disclosure is to provide a control device for a power converter and program that can rapidly increase the temperature of a target to be heated while maintaining a stopped state of rotation of a rotor of a rotating electric machine.

The present disclosure relates to a control device for a power converter that is applied to a system that includes a power storage unit, a plurality of power converters electrically connected to the power storage unit, a rotating electric machine having windings electrically connected to each of the power converters, and a heat transfer unit that transfers heat generated in at least one of the power converters to a target to be heated.

The control device includes a determination unit that determines whether there is a request to increase the temperature of the target to be heated, and a control unit that performs switching control of each of the power converters so as to pass d-axis and q-axis AC currents through the windings while maintaining a stopped state of the rotor of the rotating electric machine when the determination unit determines that there is a temperature increase request.

According to the present disclosure, by causing a q-axis current to flow in addition to a d-axis current, it is possible to increase the amount of heat generated by switching control. Therefore, by transferring the heat generated by the switching control to the target to be heated via the heat transfer unit, the temperature of the target to be heated can be increased quickly. At this time, the rotor can be kept stopped from rotating.

BRIEF DESCRIPTION OF THE DRAWINGS

The above and other objects, features and advantages of the present disclosure will become more apparent from the following detailed description made with reference to the accompanying drawings. In the drawings:

FIG. 1 is a diagram showing an overall configuration of an in-vehicle system according to a first embodiment;
FIG. 2 is a diagram showing an overview of a cooling system as a heat transfer unit;
FIG. 3 is a diagram showing changes in three-phase AC current, d-axis and q-axis currents, field current, and torque during temperature increase control;
FIG. 4 is a diagram showing current vectors during temperature increase control in a dq coordinate system;

FIG. 5 is a diagram showing changes in three-phase AC current, d-axis and q-axis currents, field current, and torque during temperature increase control in a comparative example;

FIG. 6 is a flowchart showing a process for temperature increase control;

FIG. 7 is a diagram showing current vectors during temperature increase control in a dq coordinate system according to a modified example of the first embodiment;

FIG. 8 is a diagram showing current vectors during temperature increase control in a dq coordinate system according to a modified example of the first embodiment;

FIG. 9 is a diagram showing current vectors during temperature increase control in a dq coordinate system according to a modified example of the first embodiment;

FIG. 10 is a diagram showing current vectors during temperature increase control in a dq coordinate system according to a modified example of the first embodiment;

FIG. 11 is a diagram showing a current flowing during temperature increase control according to a modified example of the first embodiment;

FIG. 12 is a diagram showing a transition of a current during a temperature increase control according to a second embodiment;

FIG. 13 is a diagram showing a transition of a current during a temperature increase control according to a third embodiment;

FIG. 14 is a diagram showing an overall configuration of an in-vehicle system according to a fourth embodiment;

FIG. 15 is a diagram showing current vectors during temperature increase control in a dq coordinate system;

FIG. 16 is a diagram showing current vectors during temperature increase control in a dq coordinate system according to a modified example of the fourth embodiment; and

FIG. 17 is a diagram showing the overall configuration of an in-vehicle system according to a fifth embodiment.

## DETAILED DESCRIPTION

### <First Embodiment>

A first embodiment of a control device according to the present disclosure will be described below with reference to the drawings. A system including the control device of the present embodiment is mounted on a vehicle such as an electric vehicle or a hybrid vehicle.

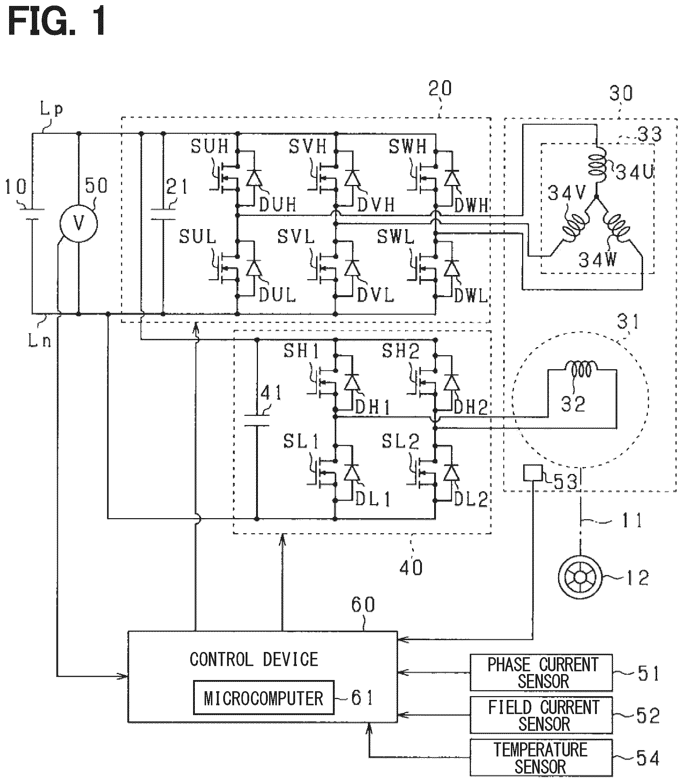

As shown in FIG. 1, the system includes a storage battery 10 (corresponding to an "power storage unit"), two power converters, and a rotating electric machine 30. In the present embodiment, the rotating electric machine 30 is a wound field type rotating electric machine. Further, the rotating electric machine 30 has a reverse saliency characteristic in which the q-axis inductance Lq is larger than the d-axis inductance Ld.

The storage battery 10 is an assembled battery configured as a series connection of battery cells, which are single batteries. The battery cell is, for example, a secondary battery such as a lithium-ion battery. The storage battery 10 can be charged by an external charger provided outside the vehicle. The external charger is, for example, a stationary charger.

The rotating electric machine 30 includes a rotor 31. The rotor 31 is provided with a field winding 32. The rotating shaft of the rotor 31 is capable of transmitting power to drive wheels 12 of the vehicle via a power transmission mechanism 11 provided in the vehicle. Torque generated by the rotating electric machine 30 functioning as an electric motor is transmitted to the drive wheels 12 via the power transmission mechanism 11, causing the drive wheels 12 to rotate. The power transmission mechanism 11 includes, for example, a transmission and a shaft. Furthermore, the rotating electric machine 30 may be, for example, an in-wheel motor that is integrally provided on the drive wheels 12 of the vehicle, or an onboard motor that is provided on the body of the vehicle.

The rotating electric machine 30 includes a stator 33. The stator 33 includes, as armature windings, U-, V- and W-phase windings 34U, 34V and 34W which are star-connected with an electrical angle of 120° from each other.

The system includes, as power converters, an inverter 20 (corresponding to a "first inverter") and a field current circuit 40 (corresponding to a "second inverter"). The inverter 20 converts the direct current from the storage battery 10 into an alternating current and supplies it to the armature winding. The inverter 20 includes a series connection of U-, V-, and W-phase upper arm switches SUH, SVH, and SWH, and U-, V-, and W-phase lower arm switches SUL, SVL, and SWL. In the present embodiment, each of the switches SUH, SVH, SWH, SUL, SVL, and SWL is an N-channel MOSFET. The switches SUH, SVH, SWH, SUL, SVL, and SWL are provided with body diodes DUH, DVH, DWH, DUL, DVL, and DWL.

The drains, which are the high potential side terminals of the U-, V-, and W-phase upper arm switches SUH, SVH, and SWH, are connected to a positive terminal of the storage battery 10 via a high potential side electrical path Lp. The sources, which are low potential side terminals of the U-, V-, and W-phase lower arm switches SUL, SVL, and SWL, are connected to a negative terminal of the storage battery 10 via a low potential side electrical path Ln. Each of the electrical paths Lp and Ln is a conductive member such as a bus bar. The inverter 20 includes a first capacitor 21 which is a smoothing capacitor. The first capacitor 21 may be provided outside the inverter 20.

The field current circuit 40 supplies current from the storage battery 10 to the field winding 32. The field current circuit 40 of the present embodiment is a full-bridge circuit and includes a series connection of a first upper arm switch SH1 and a first lower arm switch SL1, and a series connection of a second upper arm switch SH2 and a second lower arm switch SL2. In the present embodiment, each of the switches SH1, SH2, SL1, and SL2 is an N-channel MOSFET. The switches SH1, SH2, SL1, and SL2 are provided with body diodes DH1, DH2, DL1, and DL2, respectively. Each of the switches SH1, SH2, SL1, and SL2 is a bidirectional conductive switching element that allows current to flow from the drain to the source and from the source to the drain when it is turned on.

The drains, which are the high potential side terminals of the first and second upper arm switches SH1 and SH2, are connected to the positive terminal of the storage battery 10 via a high potential side electrical path Lp. The sources, which are the low potential side terminals of the first and second lower arm switches SL1 and SL2, are connected to the negative terminal of the storage battery 10 via a low potential side electrical path Ln. A first end of the field winding 32 is connected to a connection point between the first upper arm switch SH1 and the first lower arm switch SL1 via a brush (not shown). A second end of the field winding 32 is connected to a connection point between the second upper arm switch SH2 and the second lower arm switch SL2 via a brush (not shown). The field current circuit 40 includes a second capacitor 41 which is a smoothing capacitor. The second capacitor 41 may be provided outside the field current circuit 40. In addition, instead of the configuration in which the second capacitor 41 is provided individually in the field current circuit 40 and the first capacitor 21 is provided individually in the inverter 20, a configuration in which a common capacitor is provided in the inverter 20 and the field current circuit 40 may be adopted. In this case, for example, the second capacitor 41 may be omitted.

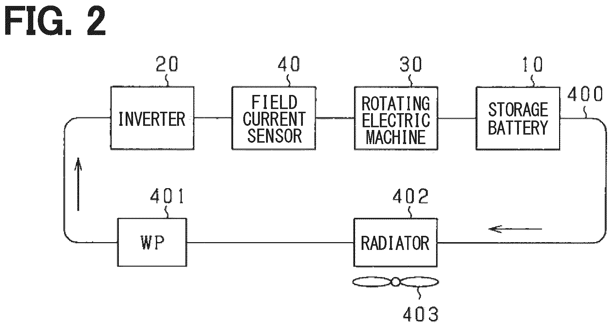

As shown in FIG. 2, the system includes devices for cooling the inverter 20, the field current circuit 40, the rotating electric machine 30, and the storage battery 10 when switching control of the inverter 20 is being performed to run the vehicle. More specifically, the vehicle includes a circulation path 400 through which the cooling water circulates, an electric water pump 401, a radiator 402, and an electric fan 403. The water pump 401 circulates the cooling water when it is powered and driven. In the example shown in FIG. 2, in circulation path 400, downstream of water pump 401, the inverter 20, the field current circuit 40, the rotating electric machine 30, and the storage battery 10 are arranged in this order. The arrangement order in the circulation path 400 is not limited to the order shown in FIG. 2.

The radiator 402 is provided in the circulation path 400 between the water pump 401 and the storage battery 10. The radiator 402 cools the cooling water that flows in through the circulation path 400 and supplies the cooled cooling water to the water pump 401. The cooling water flowing into the radiator 402 is cooled by wind blown against the radiator 402 as the vehicle moves and by wind blown against the radiator 402 by rotating the fan 403.

The water pump 401 and the fan 403 may be driven by a control device separate from the control device 60. However, in the present embodiment, for convenience, it is assumed that the water pump 401 and the fan 403 are driven by a control device 60 provided in the system.

Returning to the explanation of FIG. 1, the system includes a voltage sensor 50, a phase current sensor 51, a field current sensor 52, an angle sensor 53 and a temperature sensor 54. The voltage sensor 50 detects the voltage of the storage battery 10. The phase current sensor 51 detects phase currents flowing through at least two of the U-, V-, and W-phase windings 34U, 34V, and 34W. The field current sensor 52 detects the field current flowing through the field winding 32. The angle sensor 53 detects the rotation angle (electrical angle) of the rotor 31. The temperature sensor 54 detects the temperature of the storage battery 10. The detection values of the sensors 50 to 54 are input to the control device 60.

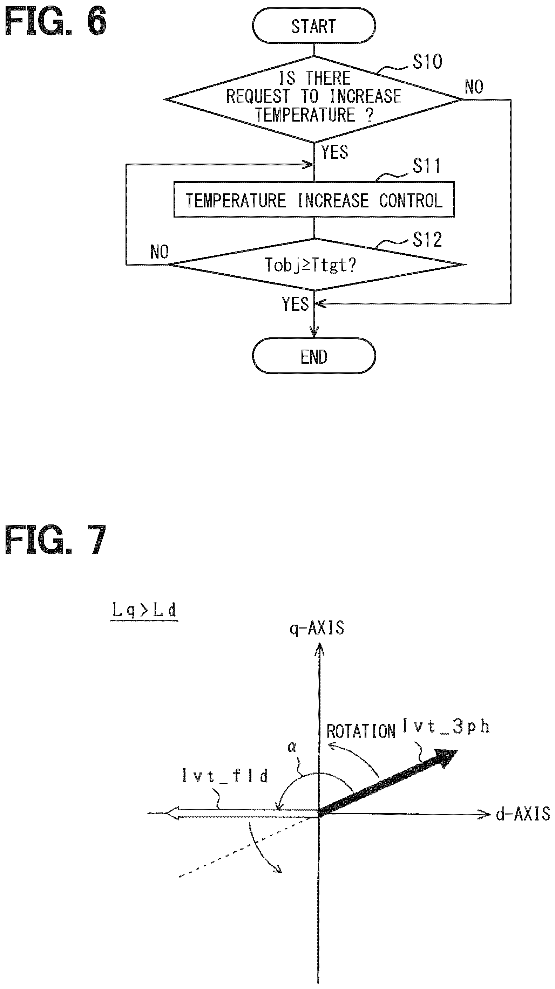

The control device 60 is mainly configured with a microcomputer 61, and the microcomputer 61 has a CPU. Means and/or functions provided by the microcomputer 61 may be provided by software recorded in a substantive memory device and a computer that can execute the software, software only, hardware only, or some combination of them. For instance, suppose that the microcomputer 61 be provided by including or using a hardware circuit serving as an electronic circuit. Such an electronic circuit may be provided by including analog circuitry and/or digital circuitry including multiple logic circuits. For example, the microcomputer 61 executes a program stored in a non-transitory tangible storage medium serving as a storage unit included therein. The program includes, for example, a program of processing shown in FIG. 6 and the like described later. With the execution of the program, a method corresponding to the program is executed. The storage unit is, for example, a non-volatile memory. The programs stored in the storage unit can be updated via a communication network such as the Internet, for example, over the air (OTA).

The control device 60 controls the switching of each switch constituting the field current circuit 40 in order to excite the field winding 32. In detail, the control device 60 performs switching control so that a first state and a second state appear alternately, in order to control the field current If detected by the field current sensor 52 to a target field current Iftgt. The first state is a state in which the first upper arm switch SH1 and the second lower arm switch SL2 are turned on, and the second upper arm switch SH2 and the first lower arm switch SL1 are turned off. The second state is a state in which the first upper arm switch SH1 and the second lower arm switch SL2 are turned off, and the second upper arm switch SH2 and the first lower arm switch SL1 are turned on.

When the field winding 32 is excited, the control device 60 performs switching control of each switch that constitutes the inverter 20 so as to feedback control the control amount of the rotating electric machine 30 to a command value based on the detection values of each sensor 50 to 54. In the present embodiment, the control amount is torque. In each phase, the upper arm switch and the lower arm switch are alternately turned on. Through this feedback control, the rotational power of the rotor 31 is transmitted to the drive wheels 12, causing the vehicle to move.

Next, the temperature increase control of the storage battery 10 executed by the control device 60 will be described. In this temperature increase control, when the storage battery 10 is charged by an external charger while the vehicle is stopped, if the temperature of the storage battery 10 detected by the temperature sensor 54 falls below a target temperature Ttgt, heat is generated by switching control of the inverter 20 and the field current circuit 40. The generated heat is transferred to the storage battery 10 via the cooling water circulating through the circulation path 400 by driving the water pump 401. The temperature increase control is continued, for example, until the temperature of the storage battery 10 reaches the target temperature Ttgt. Furthermore, the water pump 401 continues to be driven at least while the temperature increase control is being executed. In the present embodiment, the circulation path 400, the cooling water circulating through the circulation path 400, and the water pump 401 correspond to a "heat transfer unit." The temperature increase control allows the temperature of the storage battery 10 to increase quickly, thereby shortening the charging time of the storage battery 10 using an external charger.

In order to improve the temperature increase capability by the temperature increase control, the control device 60 performs switching control of the inverter 20 in the temperature increase control so as to pass d-axis and q-axis currents through the armature windings. At this time, in order to maintain the rotor 31 in a stopped state and thus the vehicle in a stopped state, the control device 60 performs switching control of the field current circuit 40 so as to reduce the reluctance torque generated by the flow of the d- and q-axis currents by the magnet torque. The temperature increase control will be described in detail below.

The torque Trq generated by the rotating electric machine 30 is made up of a magnet torque TM and a reluctance torque TR, as expressed by the following equation (eq1). In the following equation (eq1), P represents the number of pole pairs of the rotating electric machine 30, and $\varphi f$ represents the magnetic flux generated by the field current flowing through the field winding.

$$\text{Trq} = \text{TM} + \text{TR}$$

$$= P\cdot\varphi f\cdot Iq + P\cdot(Lq - Ld)\cdot Id\cdot Iq \,\ldots\, (eq1)$$

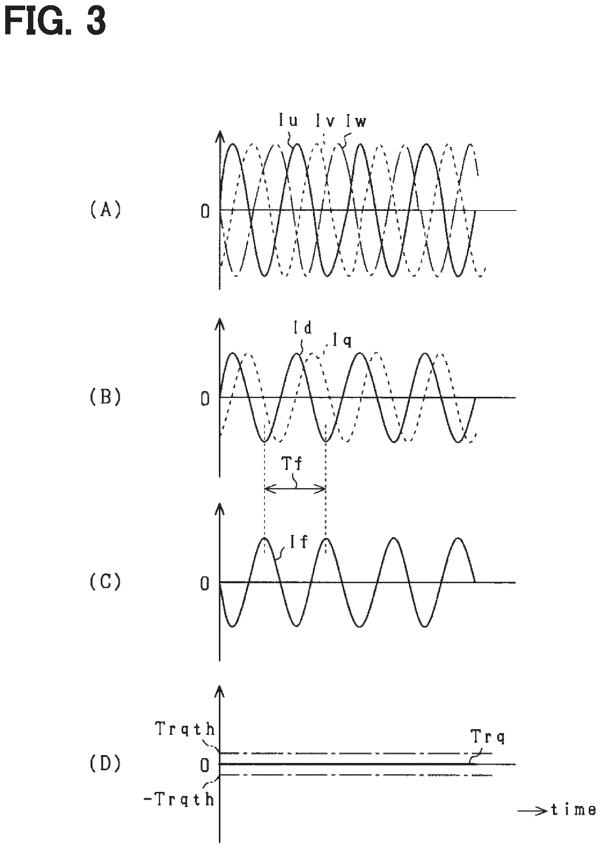

In the temperature increase control, the control device 60 performs switching control of the inverter 20 so that sinusoidal three-phase AC currents IU, IV, IW which are shifted in phase by 120 electrical degrees as shown in FIG. 3(A) are passed through the respective phase windings 34U to 34W. In this case, sine wave d-axis and q-axis currents Id and Iq flow as shown in FIG. 3(B). In this case, the frequencies of the d-axis and q-axis currents Id and Iq are the same, and the phase difference between the d-axis current Id and the q-axis current Iq is 90 degrees in electrical angle.

On the other hand, the magnetic flux $\varphi f$ is proportional to the product of the number of turns Nf of the field winding 32 and the field current If, as expressed by the following equation (eq2).

$$\Phi f \propto Nf\cdot If \,\ldots\, (eq2)$$

The condition that the reluctance torque TR is cancelled out by the magnet torque TM is imposed on the above equation (eq1). Specifically, Trq=0 is satisfied in the above equation (eq1). In this case, the following equation (eq3) is derived.

$$\Phi f = -(Lq - Ld)\cdot Id \,\ldots\, (eq3)$$

The following equation (eq4) can be derived from the above equations (eq2) and (eq3).

If

$$\propto -(Lq - Ld)\cdot Id/Nf \,\ldots\, (eq4)$$

In the present embodiment, Lq>Ld is satisfied in (eq4). For this reason, as shown in FIG. 3(C), the control device 60 sets a sinusoidal target field current Iftgt that is 180 degrees out of phase with the d-axis current Id and has the same frequency as the d-axis current Id. The control device 60 performs switching control of the field current circuit 40 so that the field current If detected by the field current sensor 52 becomes the target field current Iftgt. This makes it possible to make the difference between the reluctance torque TR and the magnet torque TM smaller than the torque threshold value Trqth, as shown in FIG. 3(D). The torque threshold Trqth is the torque at which the drive wheels 12 start to rotate, and is set, for example, to an upper limit of a range assumed as the torque at which the drive wheels 12 start to rotate. According to the above-described temperature increase control, the rotor 31 can be maintained in a stopped state, and the occurrence of a situation in which the user of the vehicle feels uncomfortable can be suppressed. A symbol Tf shown in FIG. 3 is one period of the d-axis current Id and the field current If.

In the temperature increase control of the present embodiment, switching control of three-phase upper and lower arm switches is performed. Therefore, the heat generated in the inverter 20 due to the execution of the temperature increase control can be dispersed to each phase and each arm.

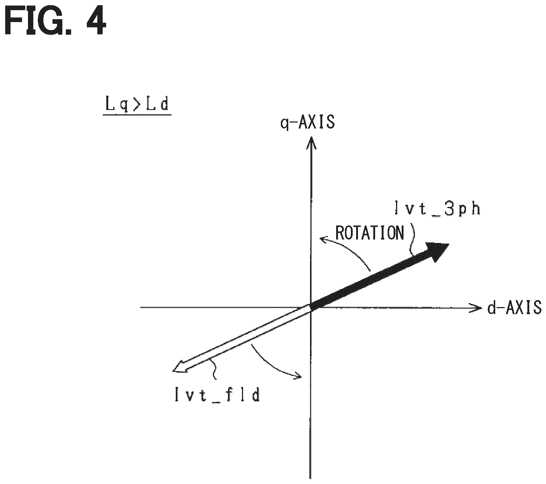

FIG. 4 is a diagram showing the current flowing during temperature increase control in a dq coordinate system. In FIG. 4, Ivt_3ph indicates a current vector (hereinafter, referred to as the armature current vector) flowing through the armature winding in the dq coordinate system, and Ivt_fld indicates a current vector (hereinafter, referred to as the field current vector) flowing through the field winding 32 in the dq coordinate system. Since the rotor 31 is stopped from rotating, the armature current vector Ivt_3ph rotates at the frequency of the three-phase AC current. The control device 60 performs switching control of the inverter 20 and the field current circuit 40 so that the phase difference between the rotating armature current vector Ivt and the rotating field current vector Ivt_fld becomes 180 degrees. As a result, the field current vector Ivt_fld comes to have a component that reduces the reluctance torque of the rotating electric machine 30, and more specifically, comes to have a component that brings the reluctance torque closer to zero.

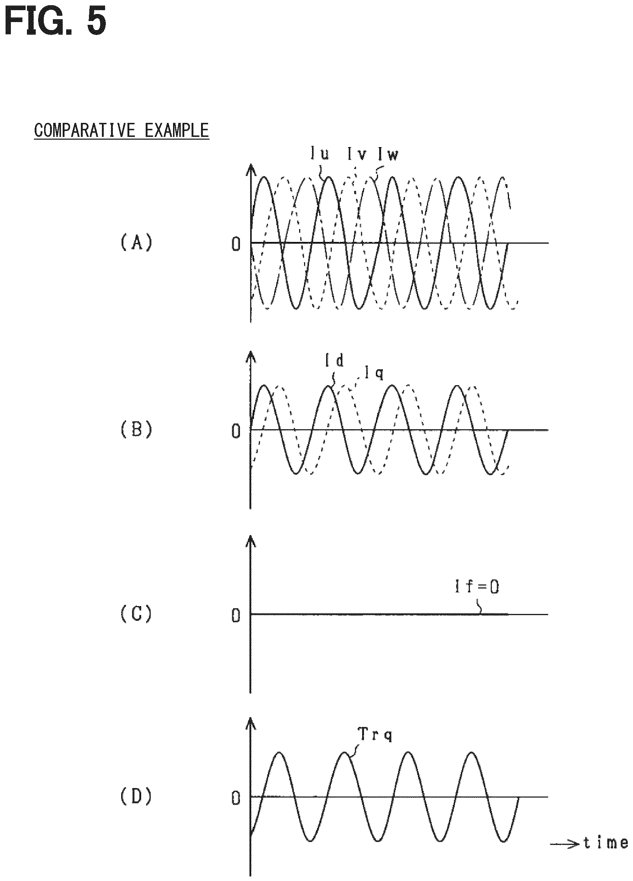

In contrast to this configuration, in the comparative example shown in FIG. 5, the field current If is maintained at 0 during the temperature increase control. As a result, the torque Trq generated by the rotating electric machine pulsates significantly, and the generated torque exceeds the torque threshold value Trqth. Incidentally, even when the field current If is maintained at a constant value other than 0 during temperature increase control, the torque Trq generated by the rotating electric machine pulsates significantly and exceeds the torque threshold value Trqth.

FIG. 6 is a flowchart showing the process of the temperature increase control executed by the control device 60. This process is executed, for example, when the control device 60 determines that charging of the storage battery 10 by the external charger has started.

In step S10, it is determined whether or not there is a request to increase the temperature of the storage battery 10. In the present embodiment, it is determined that there is the request for temperature increase when the detected temperature of the storage battery 10 is lower than the target temperature Ttgt. According to the present embodiment, the process of step S10 corresponds to a "determination unit."

When it is determined in step S10 that there is the request for temperature increase, the process proceeds to step S11, where switching control of the inverter 20 and the field current circuit 40 is performed to perform the temperature increase control described above.

In step S12, it is determined whether the temperature Tobj of the target to be heated has reached the target temperature Ttgt. In the present embodiment, as described above, the target to be heated is the storage battery 10, and therefore the temperature Tobj of the target to be heated is the temperature of the storage battery 10.

When it is determined in step S12 that the temperature of the storage battery 10 is lower than the target temperature Ttgt, the switching control in step S11 is continued. On the other hand, when it is determined that the temperature of the storage battery 10 has reached the target temperature Ttgt, the temperature increase control is stopped. In the present embodiment, the processes in steps S11 and S12 correspond to a "control unit."

Incidentally, during execution of the temperature increase control, the rotational driving of the fan 403 may be stopped in order to suppress a decrease in the temperature of the cooling water in the circulation path 400.

According to the present embodiment described above in detail, it is possible to increase the heat generated in the inverter 20, the field current circuit 40, and the rotating electric machine 30 (for example, the armature winding). The generated heat is transferred to the storage battery 10 via the circulation path 400. This allows the temperature of the storage battery 10 to be raised quickly, and ultimately reduces the charging time of the storage battery 10 through external charging. At this time, the rotor 31 can be maintained in a stopped state of rotation, which prevents the user of the vehicle from feeling uncomfortable during external charging.

\<Modification of First Embodiment\>

The phase difference $\alpha$ between the armature current vector Ivt_3ph and the field current vector Ivt_fld during temperature increase control is not limited to 180 degrees and may be an angle shown in FIG. 7, as long as the field current vector Ivt_fld has a component that reduces the reluctance torque. The phase difference $\alpha$ shown in FIG. 7 is written as positive when the field current vector Ivt_fld advances clockwise relative to the armature current vector Ivt_3ph. The phase difference $\alpha$ is set, for example, to 90 degrees $< \alpha <$ 270 degrees, preferably to 150 degrees $\leq \alpha \leq$ 210 degrees, and more preferably to 170 degrees $\leq \alpha \leq$ 190 degrees, provided that the generated torque Trq of the rotating electric machine 30 becomes smaller than the torque threshold value Trqth.

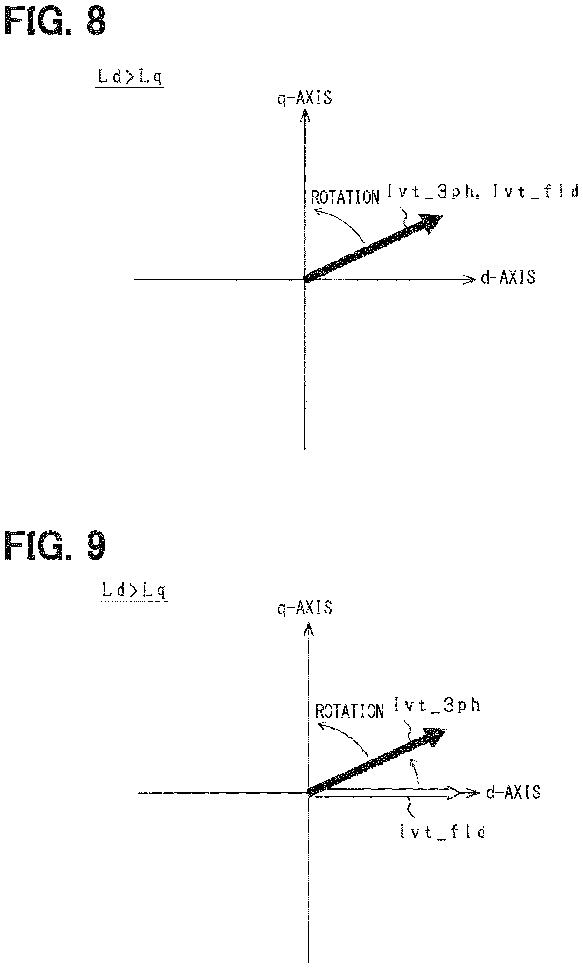

The rotating electric machine 30 may have forward salient polarity, which is a characteristic in which the d-axis inductance Ld is greater than the q-axis inductance Lq. In this case, based on the above equation (eq4), as shown in FIG. 8, in the temperature increase control, the inverter 20 and the field current circuit 40 are switched and controlled so that the phase difference $\alpha$ between the field current vector Ivt_fld and the armature current vector Ivt_3ph is 0 degrees.

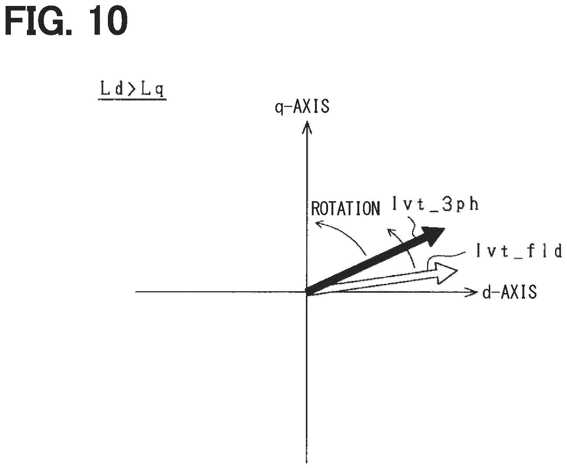

In addition, the phase difference $\alpha$ in the case of the rotating electric machine 30 having the forward salient polarity is not limited to 0 degrees and may be other angles shown in FIGS. 9 and 10 as long as the field current vector Ivt_fld has a component that reduces the reluctance torque. The phase difference $\alpha$ is set, for example, to -90 degrees $< \alpha <$ 90 degrees, preferably to -30 degrees $\leq \alpha \leq$ 30 degrees, and more preferably to -10 degrees $\leq \alpha \leq$ 10 degrees, provided that the generated torque Trq of the rotating electric machine 30 becomes smaller than the torque threshold value Trqth. FIGS. 9 and 10 show the case where the phase difference $\alpha$ becomes negative.

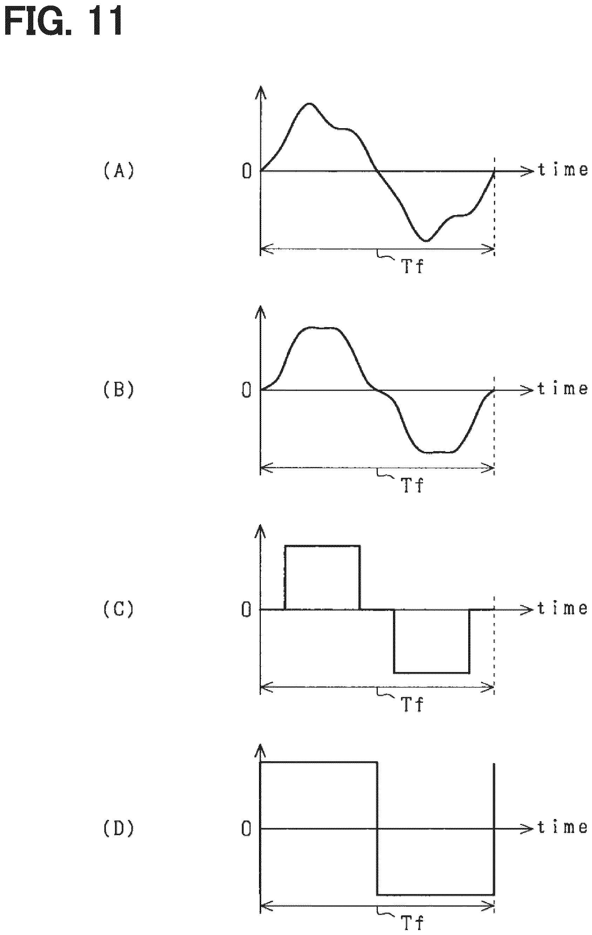

The current flowing through each phase winding 34U to 34W and the field winding 32 in the temperature increase control is not limited to a sinusoidal current, but may be a sinusoidal current containing harmonic components as shown in FIGS. 11(A) and 11(B), or may be a square wave current as shown in FIGS. 11(C) and 11(D).

The control device 60 can vary the torque threshold value Trqth. For example, when the parking brake of the vehicle is in an operating state, the torque threshold value Trqth is set to be larger than when the parking brake is not in the operating state.

In addition, the control device 60 may have an acquisition unit that acquires the temperature of the road surface on which the vehicle is traveling, and may change the torque threshold value Trqth based on the acquired road surface temperature. Here, map information in which the road surface temperature and the torque threshold value Trqth are associated with each other may be used.

During the execution of the temperature increase control, the control device 60 may apply a braking torque to the wheels of the vehicle using a mechanical brake device provided in the vehicle.

<Second Embodiment>

Hereinafter, a second embodiment will be described with reference to the drawings, focusing on differences from the first embodiment. In the present embodiment, the control device 60 performs switching control of the inverter 20 and the field current circuit 40 while the temperature increase control is being performed so as to gradually increase the amplitudes of the d-axis current, q-axis current and field current.

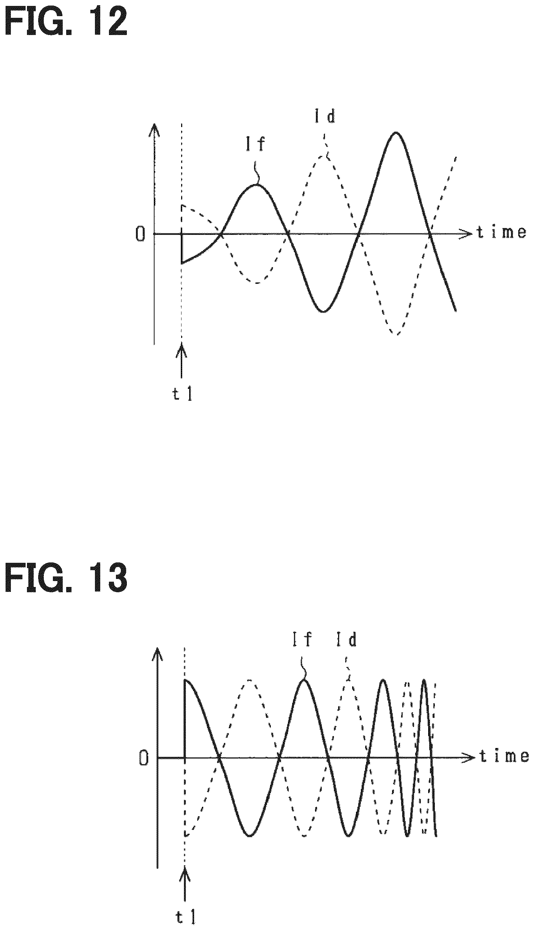

FIG. 12 shows an example of the temperature increase control of the present embodiment. At time t1, the control device 60 determines that there is a request to increase the temperature. As a result, the control device 60 starts to flow d-axis and q-axis currents Id and Iq through the armature windings, and starts switching control of the inverter 20 and the field current circuit 40 to start flowing the field current If through the field winding 32. Thereafter, the control device 60 performs switching control of the inverter 20 and the field current circuit 40 so as to gradually increase the amplitudes of the d-axis and q-axis currents Id, Iq and the field current If.

According to the present embodiment described above, it is possible to suppress vibrations of the shaft included in the power transmission mechanism 11 when the temperature increase control is started.

When the amplitude reaches a maximum value before the temperature of the storage battery 10 reaches the target temperature Ttgt, the control device 60 stops to gradually increase the amplitudes and fixes the amplitudes at the maximum value.

<Third Embodiment>

Hereinafter, a third embodiment will be described with reference to the drawings, focusing on differences from the first embodiment. In the present embodiment, the control device 60 performs switching control of the inverter 20 and the field current circuit 40 while the temperature increase control is being performed so as to gradually increase the frequencies of the d-axis current, q-axis current and field current.

FIG. 13 shows an example of the temperature increase control of the present embodiment. At time t1, the control device 60 determines that there is a request to increase the temperature. As a result, the control device 60 starts to flow d-axis and q-axis currents Id and Iq through the armature windings, and starts switching control of the inverter 20 and the field current circuit 40 to start flowing the field current If through the field winding 32. Thereafter, the control device 60 performs switching control of the inverter 20 and the field current circuit 40 so as to gradually increase the frequencies of the d-axis and q-axis currents Id, Iq and the field current If.

According to the present embodiment described above, it is possible to obtain the same effects as those of the second embodiment.

When the frequency reaches its maximum value before the temperature of the storage battery 10 reaches the target temperature Ttgt, the control device 60 stops to gradually increase the frequency and fixes the frequency at the maximum value.

<Modification of Third Embodiment>

In the temperature increase control, the amplitude and frequency of the d-axis and q-axis currents Id and Iq and the field current If may be gradually increased.

<Fourth Embodiment>

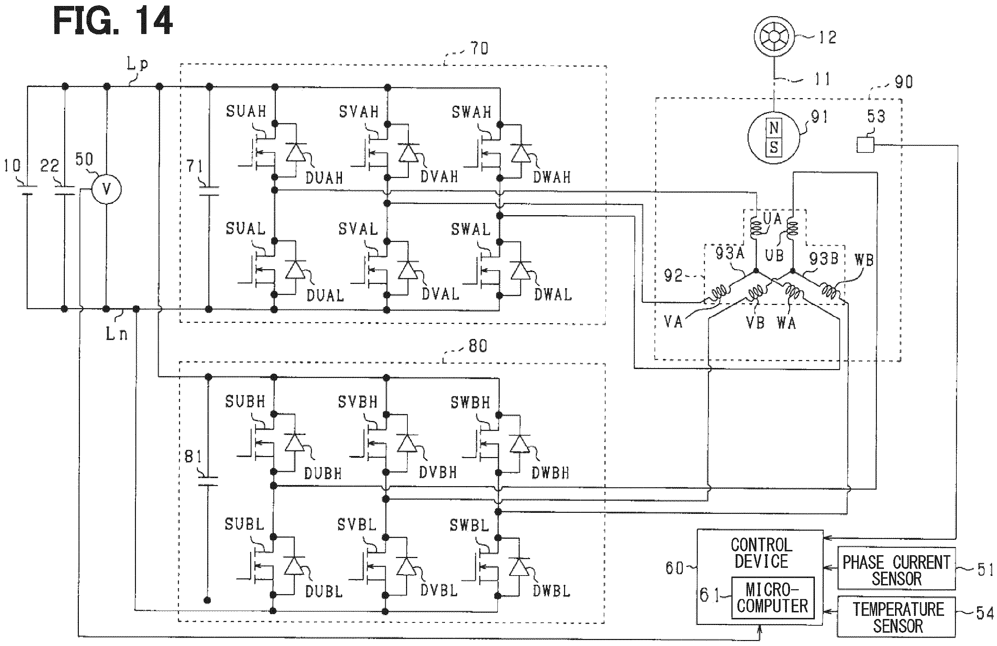

Hereinafter, a fourth embodiment will be described with reference to the drawings, focusing on differences from the first embodiment. In the present embodiment, as shown in FIG. 14, the configurations of the rotating electric machine and the inverter are modified. In FIG. 14, the same configurations as those shown in FIG. 1 are designated by the same reference numerals for convenience.

The system includes a rotating electric machine 90 having two systems of armature windings. The rotating electric machine 90 is a synchronous machine and includes a rotor 91 and a stator 92. The rotor 91 has permanent magnets as field poles. The rotating shaft of the rotor 91 is capable of transmitting power to the drive wheels 12 via the power transmission mechanism 11 provided in the vehicle.

The stator 92 includes a first armature winding 93A and a second armature winding 93B. The first armature winding 93A includes U-, V- and W-phase windings UA, VA and WA which are star-connected with an electrical angle of 120° from each other. The second armature winding 93A includes U-, V- and W-phase windings UB, VB and WB which are star-connected with an electrical angle of 120° from each other. The rotor 91 is common to the armature windings 93A and 93B. In the present embodiment, it is assumed that the phase difference between the U-phase winding UA of the first armature winding 93A and the U-phase winding UB of the second armature winding 93B is zero.

The system includes a first inverter 70 provided individually corresponding to the first armature winding 93A, and a second inverter 80 provided individually corresponding to the second armature winding 93B.

The first inverter 70, like the inverter 20 of the first embodiment, includes a series connection of U-, V-, and W-phase upper arm switches SUAH, SVAH, and SWAH and U-, V-, and W-phase lower arm switches SUAL, SVAL, and SWAL. The switches SUAH, SVAH, SWAH, SUAL, SVAL, and SWAL are provided with body diodes DUAH, DVAH, DWAH, DUAL, DVAL, and DWAL, respectively.

Similar to the first inverter 70, the second inverter 80 includes a series connection of U-, V-, and W-phase upper arm switches SUBH, SVBH, and SWBH, and U-, V-, and W-phase lower arm switches SUBL, SVBL, and SWBL. The switches SUBH, SVBH, SWBH, SUBL, SVBL, and SWBL are provided with body diodes DUBH, DVBH, DWBH, DUBL, DVBL, and DWBL, respectively.

The drains of the upper arm switches of the first inverter 70 and the second inverter 80 are connected to the positive terminal of the storage battery 10 via the high potential side electrical path Lp. The sources of the lower arm switches of the first inverter 70 and the second inverter 80 are connected to the negative terminal of the storage battery 10 via the low potential side electrical path Ln. The first inverter 70 includes a first capacitor 71 which is a smoothing capacitor. The second inverter 80 includes a second capacitor 81 which is a smoothing capacitor.

The system includes the cooling device shown in previous FIG. 2. The first inverter 70, the second inverter 80, the rotating electric machine 90, and the storage battery 10 are arranged in the circulation path 400 constituting the cooling device.

The system includes a voltage sensor 50, a phase current sensor 51, an angle sensor 53 and a temperature sensor 54. The phase current sensor 51 includes a first current sensor that detects at least two phase currents flowing through the first armature winding 93A, and a second current sensor that detects at least two phase currents flowing through the second armature winding 93B.

The control device 60 performs switching control of the switches constituting the first and second inverters 70 and 80 to feedback control the torque of the rotating electric machine 90 to the command torque based on the detection values of the sensors 50, 51, 53, and 54. Through this feedback control, the rotational power of the rotor 91 is transmitted to the drive wheels 12, causing the vehicle to move.

The control device 60 performs switching control of the first inverter 70 in order to control the torque generated by energizing the first armature winding 93A to a first command torque, and performs switching control of the second inverter 80 in order to control the torque generated by energizing the second armature winding 93B to a second command torque. As a result, the torque generated by the rotating electric machine 90 is controlled to the total torque of the first command torque and the second command torque. The first command torque and the second command torque have, for example, the same value.

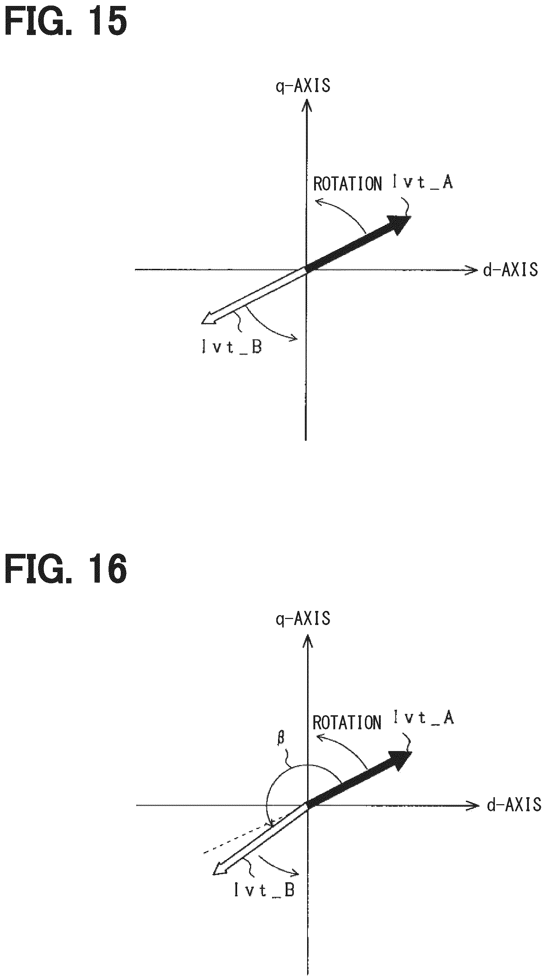

Next, the temperature increase control of the storage battery 10 executed by the control device 60 will be described. In the temperature increase control of the present embodiment, only the process of step S11 is changed from the processes shown in FIG. 6. The temperature increase control of the present embodiment will be described below with reference to FIG. 15. In FIG. 15, Ivt_A indicates the current vector (hereinafter referred to as the first armature current vector) flowing through the first armature winding 93A in the dq coordinate system, and Ivt_B indicates the current vector (hereinafter referred to as the second armature current vector) flowing through the second armature winding 93B in the dq coordinate system.

The control device 60 controls the switching of the first and second inverters 70, 80 so that the magnitudes of the first armature current vector Ivt_A and the second armature current vector Ivt_B are the same, while the phase difference between the first armature current vector Ivt_A and the second armature current vector Ivt_B becomes 180 degrees. By this control, the second armature current vector Ivt_B also rotates at the same frequency as the first armature current vector Ivt_A which rotates at the frequency of the three-phase AC current. The torque generated by supplying current through the first armature winding 93A can be reduced by the torque generated by supplying current through the second armature winding 93B. Specifically, the torque generated by supplying current through the first armature winding 93A can be made to approach zero. As a result, the torque generated by the rotating electric machine 90 becomes smaller than the torque threshold value Trqth.

According to the present embodiment described above, it is possible to quickly increase the temperature of the storage battery 10 while maintaining the rotor 91 in the stopped state.

<Modifications of Fourth Embodiment>

Similar to the control described in the second and third embodiments, at least one of the amplitude and the frequency of the d-axis and q-axis currents flowing through the first armature winding 93A and the d-axis and q-axis currents flowing through the second armature winding 93B may be gradually increased. In this case, even if an imbalance occurs in the currents flowing through the first and second armature windings 93A, 93B at the start of the temperature increase control, the influence of the imbalance can be suppressed.

In the temperature increase control, the magnitude of the first armature current vector Ivt_A and the magnitude of the second armature current vector Ivt_B may be different, provided that the torque generated by the rotating electric machine 90 becomes smaller than the torque threshold value Trqth.

The phase difference $\beta$ between the first armature current vector Ivt_A and the first armature current vector Ivt_B during temperature increase control is not limited to 180 degrees and may be an angle shown in FIG. 16, as long as the second armature current vector Ivt_B has a component that is 180 degrees out of phase with the first armature current vector Ivt_A. The phase difference $\beta$ shown in FIG. 16 is written as positive when the second armature current vector Ivt_B advances clockwise relative to the first armature current vector Ivt_A. The phase difference $\beta$ is set, for example, to 90 degrees $< \beta <$ 270 degrees, preferably to 150 degrees $\leq \beta \leq$ 210 degrees, and more preferably to 170 degrees $\leq \beta \leq$ 190 degrees, provided that the generated torque Trq of the rotating electric machine 90 becomes smaller than the torque threshold value Trqth.

The rotating electric machine may include M or more systems of armature windings and inverters (M is an integer of 3 or more). In this case, the control device 60 may perform switching control of each inverter so as to shift the phase of the current vector flowing through the armature winding of each system by "360/M" degrees in the dq coordinate system, for example.

<Fifth Embodiment>

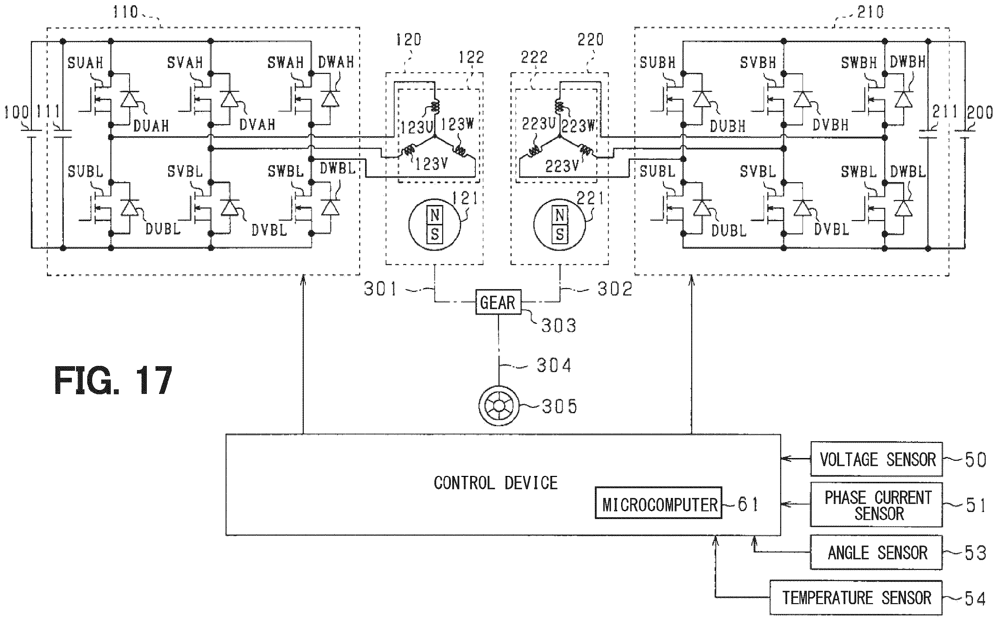

Hereinafter, a fifth embodiment will be described with reference to the drawings, focusing on differences from the first embodiment. In the present embodiment, as shown in FIG. 17, the configurations of the rotating electric machine and the inverter are modified. In FIG. 17, the same configurations as those shown in FIGS. 1 and 14 are designated by the same reference numerals for convenience.

The system includes two sets of rotating electric machines and inverters. The rotational power of the rotor of each rotating electric machine is transmitted to drive wheels 305 of the vehicle via the power transmission mechanism in the vehicle.

The system includes a first storage battery 100 and a second storage battery 200 (corresponding to "power storage unit"), a first inverter 110 and a second inverter 210, and a first rotating electric machine 120 and a second rotating electric machine 220. In the present embodiment, each of the rotating electric machines 120 and 220 is a permanent magnet field type synchronous machine, similar to the fourth embodiment. Each of the storage batteries 100 and 200 is a battery pack, and is, for example, a secondary battery such as a lithium-ion battery. Each of the storage batteries 100 and 200 can be charged by an external charger provided outside the vehicle.

The first rotating electric machine 120 includes a first rotor 121. The second rotating electric machine 220 includes a second rotor 221. The rotation shaft of the first rotor 121 and the rotation shaft of the second rotor 221 are configured to be capable of transmitting power to the drive wheel 305 via the power transmission mechanism. The power transmission mechanism includes a first drive shaft 301, a second drive shaft 302, a counter gear 303 and a shaft 304. The rotating shaft of the first rotor 121 is connected to a counter gear 303 via the first drive shaft 301, and the rotating shaft of the second rotor 221 is connected to a counter gear 303 via the second drive shaft 302. The drive wheel 305 is connected to the counter gear 303 via the shaft 304. As a result, the rotational power of each of the first rotor 121 and the second rotor 221 is summed up at the counter gear 303, and the summed rotational power is transmitted to the drive wheel 305. The first drive shaft 301, the second drive shaft 302 and the counter gear 303 correspond to a "power transmission unit."

The first rotating electric machine 120 includes a first stator 122. The first stator 122 includes, as armature windings, U-, V- and W-phase windings 123U, 123V and 123W which are star-connected with an electrical angle difference of 120° from each other. The second rotating electric machine 220 includes a second stator 222. The second stator 222 includes, as armature windings, U-, V- and W-phase windings 223U, 223V and 223W which are star-connected with an electrical angle difference of 120° from each other.

The U-, V-, and W-phase windings 123U, 123V, and 123W are electrically connected to the first storage battery 100 via a first inverter 110. The U-, V-, and W-phase windings 223U, 223V, and 223W are electrically connected to the second storage battery 200 via the second inverter 210. The first inverter 110 has a configuration similar to that of the first inverter 70 of the fourth embodiment, and the second inverter 210 has a configuration similar to that of the second inverter 80 of the fourth embodiment. The first inverter 110 includes a first capacitor 111 which is a smoothing capacitor, and the second inverter 210 includes a second capacitor 211 which is a smoothing capacitor.

The system includes the cooling device shown in previous FIG. 2. The first inverter 110, the second inverter 210, the first rotating electric machine 120, the second rotating electric machine 220, the first storage battery 100, and the second storage battery 200 are arranged on the circulation path 400 constituting the cooling device.

The system includes a voltage sensor 50, a phase current sensor 51, an angle sensor 53 and a temperature sensor 54. The phase current sensor 51 includes a first current sensor that detects at least two phase currents flowing through the armature winding of the first rotating electric machine 120, and a second current sensor that detects at least two phase currents flowing through the armature winding of the second rotating electric machine 220. The angle sensor 53 includes a first angle sensor that detects the rotation angle (electrical angle) of the first rotor 121 and a second angle sensor that detects the rotation angle (electrical angle) of the second rotor 221. The temperature sensor 54 includes a first temperature sensor that detects the temperature of the first storage battery 100 and a second temperature sensor that detects the temperature of the second storage battery 200.

The control device 60 performs switching control of switches constituting the first inverter 110 so as to feedback control the torque of the first rotating electric machine 120 to the first command torque based on the detection values of each sensor 50, 51, 53 and 54. In addition, the control device 60 performs switching control of the switches constituting the second inverter 210 to feedback control the torque of the rotating electric machine 220 to the command torque based on the detection values of the sensors 50, 51, 53 and 54. Through this feedback control, the total rotational power of the first rotor 121 and the second rotor 221 is transmitted to the drive wheels 305, causing the vehicle to travel.

Next, the temperature increase control of the first and second storage batteries 100, 200 executed by the control device 60 will be described. The temperature increase control of the present embodiment is modified from the processes shown in FIG. 6. More specifically, in step S10, the control device 60 determines that there is a request to increase the temperature when the lower of the detected temperatures of the first and second storage batteries 100, 200 is lower than the target temperature Ttgt.

When the control device 60 determines in step S12 that the lower of the temperatures of the first and second storage batteries 100, 200 has reached the target temperature Ttgt, the control device 60 stops the temperature increase control.

Next, the process of step S11 will be described with reference to previous FIG. 15. In previous FIG. 15, the first armature current vector Ivt_A is the current vector flowing in the armature winding of the first rotating electric machine 120 in the dq coordinate system, and the second armature current vector Ivt_B is the current vector flowing in the armature winding of the second rotating electric machine 220 in the dq coordinate system.

As in the fourth embodiment, the control device 60 controls the switching of the first and second inverters 70, 80 so that the magnitudes of the first armature current vector Ivt_A and the second armature current vector Ivt_B are the same, while the phase difference between the first armature current vector Ivt_A and the second armature current vector Ivt_B becomes 180 degrees. By this control, the second armature current vector Ivt_B also rotates at the same frequency as the first armature current vector Ivt_A which rotates at the frequency of the three-phase AC current. The torque generated by energizing the armature winding of the first rotating electric machine 120 can be reduced by the torque generated by energizing the armature winding of the second rotating electric machine 220. As a result, the torque transmitted to the drive wheels 305 becomes smaller than the torque threshold value Trqth.

According to the present embodiment described above, it is possible to quickly increase the temperatures of the first and second storage batteries 100, 200 while maintaining the first and second rotors 121, 221 in the stopped state from rotating.

<Modifications of Fifth Embodiment>

Similar to the control described in the second and third embodiments, at least one of the amplitude and the frequency of the d-axis and q-axis currents flowing in the armature windings of the first rotating electric machine 120 and the d-axis and q-axis currents flowing in the armature windings of the second rotating electric machine 220 may be gradually increased. In this case, even if an imbalance occurs in the torque generated by the first and second rotating electric machines 120, 220 at the start of the temperature increase control, the gear meshing in the counter gear 303 can be smoothly performed while suppressing vibration and twisting of the drive shafts 301, 302.

In the temperature increase control, the magnitude of the first armature current vector Ivt_A and the magnitude of the second armature current vector Ivt_B may be different, provided that the torque output from the shaft 304 to the drive wheels 305 becomes smaller than the torque threshold value Trqth.

The phase difference $\beta$ between the first armature current vector Ivt_A and the first armature current vector Ivt_B during temperature increase control is not limited to 180 degrees and may be an angle shown in FIG. 16, as long as the second armature current vector Ivt_B has a component that is 180 degrees out of phase with the first armature current vector Ivt_A. Referring to Figure 16 above, the phase difference $\gamma$ is set, for example, to 90 degrees $< \gamma <$ 270 degrees, preferably to 150 degrees $\leq \gamma \leq$ 210 degrees, and more preferably to 170 degrees $\leq \gamma \leq$ 190 degrees, provided that the torque output from the shaft 304 to the drive wheel 305 becomes smaller than the torque threshold value Trqth.

The system may include M or more sets of rotating electric machines and inverters (M is an integer of 3 or more). In this case, the control device 60 may perform switching control of each inverter so as to shift the phase of the current vector flowing through the armature windings of each rotating electric machine by "360/M" degrees, for example, in the dq coordinate system.

The storage battery electrically connected to the first inverter 110 and the storage battery electrically connected to the second inverter 210 may be a common storage battery.

<Other Embodiments>

The above embodiments may be changed and carried out as follows.

In the temperature increase control of the fourth and fifth embodiments, the phase current may include harmonic components as shown in FIG. 11.

In the first to third embodiments, the rotating electric machine is not limited to one having only a field winding as a field pole, and may be one having a permanent magnet in addition to a field winding. In this case, when the magnetic flux generated by the permanent magnet is $\varphi m$, the following equation (eq5) is satisfied instead of the above equation (eq1).

$$Trq = TM + TR$$

$$= P \cdot (\varphi f + \varphi m) \cdot Iq + P \cdot (Lq - Ld) \cdot Id \cdot Iq \dots (eq5)$$

Substituting Trq=0 into the above equation (eq5), the following equation (eq6) is derived.

$$\Phi f = -(Lq - Ld) \cdot Id - \varphi m \dots (eq6)$$

The following equation (eq7) can be derived from the above equations (eq2) and (eq6).

If

$$\propto -(Lq - Ld) \cdot Id/Nf - \varphi m/Nf \dots (eq7)$$

According to the above equation (eq7), the field current obtained by superimposing a DC component corresponding to "-$\varphi m$/Nf" on the AC field current If described in the first embodiment is set as the target field current Iftgt, thereby making it possible to maintain the rotor 31 in the stopped state from rotating.

The rotating electric machine is not limited to one in which the field winding is provided on the rotor, but may be one in which the field winding is provided on the stator, such as a hybrid field flux switching motor (HEFSM).

The rotating electric machine is not limited to a synchronous machine, and may be an asynchronous machine such as an induction machine.

The rotating electric machine is not limited to a radial type in which the rotor and the stator face each other in the radial direction, but may be an axial type in which the rotor and the stator face each other in the axial direction of the rotating shaft.

The rotating electric machine is not limited to a star-connected one, and may be a delta-connected one. Furthermore, the rotating electric machine and the inverter are not limited to three-phase ones, but may be two-phase ones or four or more phase ones.

The target to be heated by the temperature increase control may be, for example, the cooling water flowing in the circulation path 400. When a vehicle is equipped with an air conditioner that uses cooling water as a heat source for heating the interior of the vehicle, the temperature of the heat source for heating can be quickly increased by the temperature increase control.

The heat transfer unit is not limited to one that uses cooling water as a cooling fluid. For example, it may be an air-cooled type that uses gas (air) as a cooling fluid, or it may be a metal heat sink. When a heat sink is used as the heat transfer unit, for example, a power converter such as an inverter and a storage battery may be provided on the heat sink.

The switches of the inverter are not limited to N-channel MOSFETs and may be, for example, IGBTs. In this case, a freewheel diode may be connected in inverse parallel to the IGBT.

The power storage unit connected to a power converter such as an inverter is not limited to a storage battery. For example, it may be a large-capacity electric double-layer capacitor, or may be both a storage battery and an electric double-layer capacitor.

The mobile object on which the control device is mounted is not limited to a vehicle, and may be, for example, an aircraft or a ship. Furthermore, the control device may be mounted on a stationary device rather than the mobile object.

The control units and methods thereof described in the present disclosure may be implemented by a dedicated computer including a processor programmed to execute one or more functions embodied by a computer program and a memory. Alternatively, the control units and the methods thereof described in the present disclosure may be implemented by a dedicated computer including a processor with one or more dedicated hardware logic circuits. Alternatively, the control circuit and method described in the present disclosure may be realized by one or more dedicated computer, which is configured as a combination of a processor and a memory, which are programmed to perform one or more functions, and a processor which is configured with one or more hardware logic circuits. The computer programs may be stored, as instructions to be executed by a computer, in a tangible non-transitory computer-readable medium.

Characteristic configurations extracted from each of the above-described embodiments will be described below.

[Configuration 1]

A control device (60) for a power converter is applied to a system including a power storage unit (10, 100, 200), a plurality of power converters (20, 40, 70, 80, 110, 210) electrically connected to the power storage unit, a rotating electric machine (30, 90, 120, 220) having windings electrically connected to each of the power converters, and a heat transfer unit (400, 401) that transfers heat generated in at least one of the power converters to a target (10, 100, 200) to be heated.

The control device (60) for the power converter includes a determination unit that determines whether there is a temperature increase request for the target to be heated, and a control unit that performs switching control of each of the power converters so as to pass AC d-axis and q-axis currents through the windings (32, 34U to 34W, 93A, 93B, 123U to 123W, 223U to 223W) while maintaining a rotation stopped state of a rotor (31, 91, 121, 221) of the rotating electric machine when the determination unit determines that there is a temperature increase request.

[Configuration 2]

In the control device for the power converter according to configuration 1, the rotating electric machine (30) has, as the windings, a multi-phase armature winding (34U to 34W) and a field winding (32).

Among the power converters, the power converter to which the armature winding is electrically connected is a first inverter (20), and the power converter to which the field winding is electrically connected is a second inverter (40).

The control unit performs switching control of the first inverter and the second inverter so that a current vector flowing through the field winding in a dq coordinate system has a component that reduces a reluctance torque of the rotating electric machine while maintaining the rotor (31) in a stopped state from rotating.

[Configuration 3]

In the control device for the power converter according to configuration 2, the rotating electric machine has a characteristic that a q-axis inductance is larger than a d-axis inductance.

The control unit controls the switching of the first inverter and the second inverter so that the current vector flowing through the field winding in the dq coordinate system has a component that is 180 degrees out of phase with the current vector flowing through the armature winding in the dq coordinate system.

[Configuration 4]

In the control device for the power converter according to configuration 2, the rotating electric machine has a characteristic that a d-axis inductance is larger than a q-axis inductance.

The control unit controls the switching of the first inverter and the second inverter so that the current vector flowing through the field winding in a dq coordinate system has a component that is the same of phase as the current vector flowing through the armature winding in the dq coordinate system.

[Configuration 5]

In the control device for the power converter according to any one of configurations 2 to 4, the control unit performs switching control of the first inverter and the second inverter so that a generated torque of the rotating electric machine becomes smaller than a torque threshold value (Trqth).

The torque threshold is the torque at which the rotor begins to rotate.

[Configuration 6]

In the control device for the power converter according to any one of configurations 2 to 5, the second inverter includes two sets of series-connected upper and lower arm switches (SH1, SL1, SH2, SL2) capable of bidirectional current flow.

[Configuration 7]

In the control device for the power converter according to configuration 1, the rotating electric machine (90) has armature windings (93A, 93B) of a plurality of systems as the windings.

The rotor (91) is common to the armature windings of the multiple systems.

Each of the power converters is an inverter (70, 80) provided individually corresponding to the armature winding of each system.

The control unit performs switching control of each of the inverters so as to shift the phases of current vectors flowing through the armature windings of each system in a dq coordinate system in order to maintain the rotor in a stopped state from rotating.

[Configuration 8]

In the control device for the power converter according to configuration 7, when the number of systems of the armature winding is N, the control unit performs switching control of each of the inverters so as to shift the phase of a current vector flowing through the armature winding of each system by "360/N" degrees in the dq coordinate system.

[Configuration 9]

In the control device for the power converter according to configuration 1, the system includes a plurality of rotating electric machines (120, 220) having armature windings (123U to 123W, 223U to 223W) as the windings.

Each of the power converters is an inverter (110, 210) provided individually corresponding to the armature winding of each of the rotating electric machines.

The system includes a power transmission unit (301 to 303) that transmits power between the rotors (121, 221) of the rotating electric machines.

The control unit performs switching control of the inverters so as to shift the phases of current vectors flowing through the armature windings of the rotating electric machines from each other in the dq coordinate system in order to maintain the rotor in a stopped state from rotating.

[Configuration 10]

In the control device for the power converter according to configuration 9, when the number of the rotating electric machines is N, the control unit performs switching control of each of the inverters so as to shift the phase of a current vector flowing through the armature winding of each of the rotating electric machines by "360/N" degrees in the dq coordinate system.

[Configuration 11]

In the control device for the power converter according to any one of configurations 1 to 10, when the determination unit determines that there is a temperature increase request, the control unit starts flowing d-axis and q-axis currents to the windings and performs switching control of the power converters so as to gradually increase at least one of the amplitude and the frequency of the d-axis and q-axis currents to be flowed to the windings.

[Configuration 12]

In the control device for the power converter according to any one of configurations 1 to 11, the system is mounted on a vehicle having a drive wheel (12, 305) that rotates by transmitting the rotational power of the rotor.

[Configuration 13]

A program is applied to a system including a power storage unit (10, 100, 200), a plurality of power converters (20, 40, 70, 80, 110, 210) electrically connected to the power storage unit, a rotating electric machine (30, 90, 120, 220) having windings electrically connected to each of the power converters, a heat transfer unit (400, 401) that transfers heat generated in at least one of the power converters to a target (10, 100, 200) to be heated, and a computer (61).

The program causes the computer to function as a determination unit that determines whether there is a temperature increase request for the target to be heated, and a control unit that performs switching control of each of the power converters so as to pass AC d-axis and q-axis currents through the windings (32, 34U to 34W, 93A, 93B, 123U to 123W, 223U to 223W) while maintaining a rotation stopped state of a rotor (31, 91, 121, 221) of the rotating electric machine when the determination unit determines that there is a temperature increase request.

Although the present disclosure has been described in accordance with the examples, it is understood that the present disclosure is not limited to such examples or structures. The present disclosure encompasses various modifications and variations within the scope of equivalents. In addition, while the various combinations and configurations, which are preferred, other combinations and configurations, including more, less or only a single element, are also within the spirit and scope of the present disclosure.

**Claims**

1. A control device (60) for a power converter applied to a system including a power storage unit (10, 100, 200), a plurality of power converters (20, 40, 70, 80, 110, 210) electrically connected to the power storage unit, a rotating electric machine (30, 90, 120, 220) having windings electrically connected to each of the power converters, and a heat transfer unit (400, 401) that transfers heat generated in at least one of the power converters to a target (10, 100, 200) to be heated, the control device for the power converter, comprising:

   a determination unit that determines whether there is a temperature increase request for the target to be heated; and
   a control unit that performs switching control of each of the power converters so as to pass AC d-axis and q-axis currents through the windings (32, 34U to 34W, 93A, 93B, 123U to 123W, 223U to 223W) while maintaining a rotation stopped state of a rotor (31, 91, 121, 221) of the rotating electric machine when the determination unit determines that there is a temperature increase request.

2. The control device for the power converter according to claim 1, wherein

   the rotating electric machine (30) has, as the windings, a multi-phase armature winding (34U to 34W) and a field winding (32),
   among the power converters, the power converter to which the armature winding is electrically connected is a first inverter (20), and the power converter to which the field winding is electrically connected is a second inverter (40), and
   the control unit performs switching control of the first inverter and the second inverter so that a current vector flowing through the field winding in a dq coordinate system has a component that reduces a reluctance torque of the rotating electric machine while maintaining the rotor (31) in a stopped state from rotating.

3. The control device for the power converter according to claim 2, wherein

   the rotating electric machine has a characteristic that a q-axis inductance is larger than a d-axis inductance, and
   the control unit controls the switching of the first inverter and the second inverter so that the current vector flowing through the field winding in the dq coordinate system has a component that is 180 degrees out of phase with the current vector flowing through the armature winding in the dq coordinate system.

4. The control device for the power converter according to claim 2, wherein

the rotating electric machine has a characteristic that a d-axis inductance is larger than a q-axis inductance, and the control unit controls the switching of the first inverter and the second inverter so that the current vector flowing through the field winding in the dq coordinate system has a component that is the same of phase as the current vector flowing through the armature winding in the dq coordinate system.

5. The control device for the rotating electric machine according to any one of claims 2 to 4, wherein

the control unit performs switching control of the first inverter and the second inverter so that a generated torque of the rotating electric machine becomes smaller than a torque threshold value (Trqth), and the torque threshold is the torque at which the rotor begins to rotate.

6. The control device for the power converter according to claim 2, wherein the second inverter includes two sets of series-connected upper and lower arm switches (SH1, SL1, SH2, SL2) capable of bidirectional current flow.

7. The control device for the power converter according to claim 1, wherein

the rotating electric machine (90) has armature windings (93A, 93B) of a plurality of systems as the windings, the rotor (91) is common to the armature windings of the multiple systems, each of the power converters is an inverter (70, 80) provided individually corresponding to the armature winding of each system, and the control unit performs switching control of each of the inverters so as to shift the phases of current vectors flowing through the armature windings of each system in a dq coordinate system in order to maintain the rotor in a stopped state from rotating.

8. The control device for the power converter according to claim 7, wherein when the number of systems of the armature winding is N, the control unit performs switching control of each of the inverters so as to shift the phase of a current vector flowing through the armature winding of each system by "360/N" degrees in the dq coordinate system.

9. The control device for the power converter according to claim 1, wherein

the system includes a plurality of rotating electric machines (120, 220) having armature windings (123U to 123W, 223U to 223W) as the windings, each of the power converters is an inverter (110, 210) provided individually corresponding to the armature winding of each of the rotating electric machines, the system includes a power transmission unit (301 to 303) that transmits power between the rotors (121, 221) of the rotating electric machines, and the control unit performs switching control of the inverters so as to shift the phases of current vectors flowing through the armature windings of the rotating electric machines from each other in the dq coordinate system in order to maintain the rotor in a stopped state from rotating.

10. The control device for the power converter according to claim 9, wherein when the number of the rotating electric machines is N, the control unit performs switching control of each of the inverters so as to shift the phase of a current vector flowing through the armature winding of each of the rotating electric machines by "360/N" degrees in the dq coordinate system.

11. The control device for the power converter according to any one of claims 1 to 4 and 6 to 10, wherein when the determination unit determines that there is a temperature increase request, the control unit starts flowing d-axis and q-axis currents to the windings and performs switching control of the power converters so as to gradually increase at least one of an amplitude and a frequency of the d-axis and q-axis currents to be flowed to the windings.

12. The control device for the power converter according to any one of claims 1 to 4 and 6 to 10, wherein the system is mounted on a vehicle having a drive wheel (12, 305) that rotates by transmitting the rotational power of the rotor.

13. A program applied to a system including a power storage unit (10, 100, 200), a plurality of power converters (20, 40, 70, 80, 110, 210) electrically connected to the power storage unit, a rotating electric machine (30, 90, 120, 220) having windings electrically connected to each of the power converters, a heat transfer unit (400, 401) that transfers heat generated in at least one of the power converters to a target (10, 100, 200) to be heated, and a computer (61), wherein the program causes the computer to function as

a determination unit that determines whether there is a temperature increase request for the target to be heated, and
a control unit that performs switching control of each of the power converters so as to pass AC d-axis and q-axis currents through the windings (32, 34U to 34W, 93A, 93B, 123U to 123W, 223U to 223W) while maintaining a rotation stopped state of a rotor (31, 91, 121, 221) of the rotating electric machine when the determination unit determines that there is a temperature increase request.

# FIG. 1

# FIG. 2

# FIG. 3

(A)

Iu Iv Iw

0

(B)

Id Iq

0

Tf

(C)

If

0

(D)

Trqth

0

-Trqth

Trq

→time

# FIG. 4

Lq>Ld

# FIG. 5

COMPARATIVE EXAMPLE

(A)

(B)

(C)

(D)

# FIG. 6

```
            ┌─────────────┐
            │    START    │
            └─────────────┘
                   │
                  S10
          ╱─────────────────╲        NO
         ╱    IS THERE        ╲─────────┐
         ╲ REQUEST TO INCREASE ╱         │
          ╲   TEMPERATURE ?  ╱           │
           ╲────────────────╱            │
                   │ YES                 │
        ┌──────────────────────S11       │
        │ ┌──────────────────────────┐   │
        └→│ TEMPERATURE INCREASE CONTROL │   │
          └──────────────────────────┘   │
                   │        S12          │
        NO ╱────────────────╲            │
       ┌───╲   Tobj≥Ttgt?    ╱           │
       │    ╲───────────────╱            │
       │           │ YES ←───────────────┘
       │           ↓
       │    ┌─────────────┐
       │    │     END     │
       │    └─────────────┘
```

# FIG. 7

Lq > Ld

# FIG. 8

Ld>Lq

q-AXIS

ROTATION Ivt_3ph, Ivt_fld

d-AXIS

# FIG. 9

Ld>Lq

q-AXIS

ROTATION Ivt_3ph

d-AXIS

Ivt_fld

# FIG. 10

Ld>Lq

q-AXIS

ROTATION Ivt_3ph

Ivt_fld

d-AXIS

# FIG. 11

(A)

(B)

(C)

(D)

# FIG. 12

# FIG. 13

# FIG. 14

EP 4 554 083 A1

# FIG. 15

q-AXIS

ROTATION Ivt_A

d-AXIS

Ivt_B

# FIG. 16

q-AXIS

ROTATION Ivt_A

β

d-AXIS

Ivt_B

FIG. 17

## INTERNATIONAL SEARCH REPORT

International application No.

**PCT/JP2023/021479**

### A. CLASSIFICATION OF SUBJECT MATTER

*H02P 27/06*(2006.01)i; *H02P 21/22*(2016.01)i
FI:  H02P27/06; H02P21/22

According to International Patent Classification (IPC) or to both national classification and IPC

### B. FIELDS SEARCHED

Minimum documentation searched (classification system followed by classification symbols)

H02P27/06; H02P21/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 5259752 B2 (HITACHI, LTD.) 07 August 2013 (2013-08-07) paragraphs [0012]-[0065], fig. 1-7 | 1, 7-13 |
| A | | 2-6 |
| Y | JP 2016-86502 A (DENSO CORP.) 19 May 2016 (2016-05-19) paragraphs [0019]-[0066], fig. 1-15 | 1, 7-13 |
| Y | JP 2016-178842 A (MITSUBISHI MOTORS CORP.) 06 October 2016 (2016-10-06) paragraphs [0029]-[0055], fig. 1-5 | 9-12 |
| A | WO 2021/057339 A1 (BYD CO. LTD.) 01 April 2021 (2021-04-01) paragraphs [0144], [0145], fig. 11, 12 | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 August 2023** | **22 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/021479**

| Patent document cited in search report | | | Publication date (day/month/year) | Patent family member(s) | | | Publication date (day/month/year) |
|---|---|---|---|---|---|---|---|
| JP | 5259752 | B2 | 07 August 2013 | JP 2012-165526 A paragraphs [0012]-[0065], fig. 1-7 US 2012/0200241 A1 paragraphs [0023]-[0074], fig. 1-7 CN 102627073 A | | | |
| JP | 2016-86502 | A | 19 May 2016 | US 2016/0118923 A1 paragraphs [0041]-[0116], fig. 1-15 CN 105553210 A | | | |
| JP | 2016-178842 | A | 06 October 2016 | (Family: none) | | | |
| WO | 2021/057339 | A1 | 01 April 2021 | JP 2022-550333 A paragraphs [0081], [0082], fig. 11, 12 US 2022/0329195 A1 paragraphs [0141], [0142], fig. 11, 12 EP 4043254 A1 CN 112644340 A KR 10-2022-0065068 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022109667 A
- JP 5259752 B